# EUROPÄISCHE PATENTANMELDUNG

(11) **EP 1 566 779 A1**
(43) Veröffentlichungstag der Anmeldung: **24.08.2005**
(21) Anmeldenummer: 04100701.4
(22) Anmeldetag: 23.02.2004
(51) Int. Cl.: G07F 19/00

(54) **Transaktionssystem**

(71) Anmelder: e-Prompt International Holding AG, 6312 Steinhause (CH)
(72) Erfinder: Kremer, Frank, 35043, Marburg (DE); Briegel, Horst Jürgen, 35415, Pohlheim (DE); Gaul, Frank Wilhelm, 35039, Marburg (DE)
(74) Vertreter: Patentanwälte Kewitz & Kollegen

(57) **Zusammenfassung**

Bei der Erfindung handelt es sich um ein Verfahren zur Durchführung von Transaktionen mit einem mobilen Endgerät, umfassend einen Transaktionsserver, der über eine WAPund/oder Web-Schnittstelle angesprochen wird. Über das Login wird mittelbar das Ziel der Transaktion bestimmt, ohne dass dies aufgrund des Logins änderbar ist. Da die Transaktion nicht automatisch vom Konto des Zahlenden auf das Konto des Empfängers durch die Zwischenschaltung eines Dienstleisters erfolgt, sondern erst über ein Zwischenkonto des Anbieters des Virtuellen Terminals zum Empfänger, spricht man von einer mittelbaren Transaktion. Hierbei wird ein Virtuelles Terminal durch einen Transaktionsserver simuliert, der eine Vielzahl von mobilen Virtuellen Terminals bereitstellt.

Über Eingabefelder der Tastatur eines mobilen Endgerätes oder ein mit dem Handy verbundenes Kartenlesegerät oder Lesestift wird eine Auswahl der Zahlungsart bestimmt. Hierbei wird vorzugsweise die EC-Lastschrift, die Kreditkarten-Belastung, die Service-Karten-Belastung oder die Online-Überweisung gewählt.

## Beschreibung

Die Erfindung betrifft ein Verfahren und Vorrichtungen zur Durchführung von Onlinetransaktionen. Insbesondere umfasst die Erfindung ein Verfahren zum Einzug von Geldern über Kreditkarten, Elektronisches Lastschriftverfahren, Online Überweisungen oder Service-Karten.

### Gebiet der Erfindung:

Im Bereich des Einzugs von Geldern über Onlinetransaktionen ist eine Reihe von Problemen zu beachten. Einerseits bergen Onlinetransaktionen das Risiko, dass die Zahlung nicht abgeschlossen werden kann, da der Inhaber der Karte seine Berechtigung überschritten hat. Andererseits kann die Karte gestohlen worden sein, so dass Zahlungen durch einen Nichtberechtigten erfolgen. Oder die Kreditkarteninformationen wurden festgehalten und zu einer manipulativen Transaktion missbraucht.

Für Inkassoberechtigte bedarf es weiterhin eines einfachen Verfahrens, um Gelder von Schuldnern umgehend und mobil einzuziehen. Einen entsprechenden Anspruch besitzt z.B. die Verkehrspolizei, die säumige Verkehrssünder umgehend belangen möchte. Für entsprechende Einzugsverfahren ist ein sehr hoher technischer Aufwand notwendig, der einerseits daraus resultiert, dass entsprechende Lizenzen bei Unternehmen zu beantragen sind, die den bargeldlosen Geldeinzug vornehmen und verwalten, und andererseits darin begründet ist, dass eine Infrastruktur bereitgestellt wird, die einfach zu bedienen ist, dabei jedoch aufgrund der SSL-Verschlüsselung eine hohe Sicherheit gewährleistet.

### Stand der Technik (S. d. T):

Für die bargeldlose Zahlung ist eine Vielzahl von Systemen aus dem Stand der Technik bekannt. Dieser umfasst z. B. die Schriften DE 10028028, DE 10133884, FR 2815203, FR 2817107, FR 2817108, GB 2370383, US 2003-119478, WO 01/13341, WO 01/68381, WO 02/11477, WO 02/29742 sowie WO 03/083793.

Alle genannten Druckschriften beschreiben ein Verfahren, bei dem ein multimobiles Endgerät eingesetzt wird, um eine Transaktion durchzuführen. Keines der Verfahren offenbart jedoch die Verwendung von mobilen Virtuellen Terminals, die Zwischenschaltung eines zusätzlichen Risikomanagements oder die Verwendung von besonderen Sicherheitsabfragen für die Durchführung der Transaktion.

Aufgabe der Erfindung ist es, ein sicheres Transaktionssystem bereitzustellen, dass durch ein mobiles Endgerät, insbesondere ein Handy oder einen PDA, MDA , angesprochen werden kann, wobei aufgrund des Logins durch das mobile Endgerät eine Vielzahl von Parametern vorgegeben ist, die einen Missbrauch verhindern und die zu einer kostengünstigen und mit hoher Sicherheit verbundenen Transaktion führen.

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet.

Im Einzelnen umfasst die Erfindung ein Serversystem, das eine Vielzahl von mobilen Virtuellen Terminals zur Verfügung stellt, die wiederum zu einer oder mehreren definierten Benutzergruppen zusammengeführt werden. Diese Virtuellen Terminals werden wiederum in der bevorzugten Ausführungsform durch WAP durch ein handelsübliches Handy angesprochen. Hierbei erfolgt durch ein Login die Aktivierung des Virtuellen Terminals. Durch das Login wird gleichzeitig das Zielkonto festgelegt. Eine Änderung dieses Zielkontos ist nicht möglich durch die Benutzung des Handys. Nachdem die Informationen für eine Transaktion eingehen, werden diese über das mobile Virtuelle Terminal an ein Institut für Kartenzahlung weitergeleitet. Nachdem das Geld eingetroffen ist, wird es aufgrund der Transaktions-Verwaltung, die für die Virtuellen Terminals durchgeführt wird, auf ein hinter jedem Virtuellen Terminal abgelegtes Konto übertragen. Dieser Ablauf erfolgt automatisch durch die Vergabe von entsprechenden eindeutigen Betreffinformationen. Hierdurch ist sichergestellt, dass die Benutzer eine enorme Kosteneinsparung erreichen, da sie nicht den Zugang zu den realen Terminals zahlen müssen. Durch ein gesichertes Login und diverse weitere Eigenschaften, die im Weiteren beschrieben werden, kann es zu einer sehr geringen Kostenbelastung mit einer hohen Effizienz und Flexibilität kommen.

Im Einzelnen handelt es sich um ein Verfahren zur Durchführung von Transaktionen mit einem mobilen Endgerät (mobile Kasse ohne Stromanschluss, akkubasiert), umfassend einen Transaktionsserver, der über eine WAP- und/oder WEB-Schnittstelle angesprochen wird. Über das Login wird mittelbar das Ziel der Transaktion bestimmt, ohne dass dies aufgrund des Logins änderbar ist. Da die Transaktion nicht automatisch vom Konto des Zahlenden auf das Konto des Empfängers durch die Zwischenschaltung eines Dienstleisters erfolgt, sondern erst über ein Zwischenkonto des Anbieters des Virtuellen Terminals zum Empfänger, spricht man von einer mittelbaren Transaktion.

Über das Eingabefeld der Tastatur oder ein mit dem Handy verbundenes Kartenlesegerät oder Lesestift wird eine Auswahl der Zahlungsart bestimmt. Hierbei wird vorzugsweise die EC-Lastschrift, die Kreditkarten-, die Service-Karten-Belastung oder die Online-Überweisung gewählt.

Weiterhin werden über weitere Eingabefelder die EC-Lastschriftinformationen, die Kreditkarteninformationen, die Service-Karten-Informationen oder die Online-Überweisungsinformationen, ein Betreff und die Summe bestimmt. In einer bevorzugten Ausführungsform können diese Informationen bereits auf dem Server hinterlegt worden sein, sodass lediglich ein Auswahlprozess erfolgt, mit dem dann die Informationen in die Maske eingetragen werden, sodass z. B. ein Vollzugsbeamter bereits frühzeitig alle Informationen auf das Handy oder den Server überträgt und dann lediglich noch Detailinformationen abgleichen muss. Hierdurch kann vermieden werden, dass Aktenzeichen oder andere Betreffinformationen falsch eingegeben werden. Der Transaktionsserver ersetzt daraufhin die Informationen mit einer eindeutigen Kennzeichnung oder versieht die mit einer solchen und leitet sie weiter. Beim Eintreffen der Zahlung wird eine Rücktransformation des Betreffs vorgenommen, sodass das Geld auf das Zielkonto übertragen werden kann. Die eindeutige Zuordnung kann durch ein entsprechendes Datenbanksystem erfolgen.

Der Eingabeprozess an mobilen Endgeräten wird durch Bestätigung der Eingabe beendet. Hierdurch wird der Geldeinzug als Transaktion ausgelöst, um dann nach einer erfolgreichen Zwischentransaktion das Geld auf ein hinter dem Login abgelegtes Konto durch eine weitere Transaktion weiterzuleiten.

Zur Verbesserung der Sicherheit ist in einer möglichen Ausführungsform beim Login ein sich täglich ändernder Code einzugeben. Weiterhin können zusätzliche Informationen wie die IMAI (eindeutige Handykennung), SIM (eindeutige Simmkartenkennung) oder Zertifikatinformationen in den Loginprozess einfließen. In einigen Fällen sind hierzu zusätzliche Applikationen auf dem mobilen Endgerät zu installieren. Hierbei handelt es sich vorzugsweise um Java Applikationen oder Java Script Applikationen, die beim Login gestartet werden, um die benötigten Informationen zu übermitteln. Es kann jedoch auch mit einem Dienstleister im Bereich der Telekommunikation vereinbart werden, dass die entsprechenden Informationen weitergeleitet werden. In einer weiteren Ausführungsform kann durch einen GPS Empfänger oder durch Zellinformationen der Bereich der Tätigkeit für das mobile Endgerät begrenzt werden, sodass beim Loginprozess überprüft wird, ob das mobile Endgerät sich in einer zulässigen Umgebung befindet. Hierdurch kann ebenfalls ein Missbrauch vermieden werden.

Weiterhin erfolgt die Kommunikation via GSM-Verschlüsselung (Global System for Mobile Telecommunications), GPRS-Verschlüsselung (General Packet Radio Service), SSL-Verschlüsselung (Secure Socket Layer) oder über WTLS-Verschlüsselung (Wireless Transport Layer Security).

Der Transaktionsserver weist weiterhin eine Schnittstelle auf, um eine Übersicht der Transaktion nach unterschiedlichen Kriterien vornehmen zu können. Da sich das System auch an Behörden richtet, die eine Vielzahl von mobilen Endgeräten zum Einsatz des Geldeinzuges verwenden, sind unterschiedliche Kriterien von besonderem Interesse. Das System stellt somit Mittel zur Verfügung, Transaktionen, die aufgrund des Logins bzw. der Kennung des mobilen Endgerätes einer oder mehreren Dienststellen zugeordnet sind, nach Dienststellen sortiert darzustellen. Der Anwender kann hinter jedem Login eine Vielzahl von Kriterien hinterlegen, die zu einer Suche und Klassifizierung führen können. Somit ist z. B. eine Transaktionsübersicht nach Dienstelle, Login, Zahlungsart oder Endgerät möglich. Der Anwender kann hierfür unterschiedliche Views selber bestimmen, die dann immer wieder verwendet werden, um Auswertungen vorzunehmen. Weiterhin hat er einen Administrationszugang, aus dem hervorgeht, welche Transaktionen durchgeführt wurden und welchen Status diese haben. Dieser Informationsservice wird vorzugsweise verschlüsselt oder signiert übertragen.

Für jede erfasste Transaktion wird eine eindeutige Transaktionsnummer generiert, die es ermöglicht, den entsprechenden späteren Geldeingang eindeutig zuzuordnen.

Zur Vermeidung des Entstehens von Kosten wird eine Risikoanalyse automatisch durchgeführt. Eine detaillierte Beschreibung dieser Risikoanalyse befindet sich im Zusammenhang mit der weiter unten beschriebenen Figur. Hierbei werden statistische Daten gesammelt und ausgewertet. Diese Analyse basiert auf der Relation von Transaktionsinformationen in Bezug zu der verwendeten Karte, wobei die Anzahl der Transaktionen und/oder zentrale Diebstahllisten und/oder Rückbelastungen und/oder Limits und/oder Umsatzkurven und/oder Ländercodes automatisch überprüft werden.

Über eine kabellose Schnittstelle, insbesondere Infrarotfunk oder Bluetooth, kann durch das mobile Endgerät ein Belegdrucker angesprochen werden, der die Transaktion auf Papier festhält.

Weitere Bestandteile der Erfindung sind mobile Endgeräte und ein entsprechender Server, der eine Reihe von mobilen Virtuellen Terminals darstellt. Diese Vorrichtungen übernehmen die in diesem Verfahren beschriebenen Vorgänge, wie auch aus den entsprechenden Ansprüchen entnehmbar ist.

In der bevorzugten Ausführungsform wird ein Risikomanagement durchgeführt, das auf eine oder mehrere Datenbanken aufsetzt, bei dem die Anzahl der Transaktionen, zentrale Diebstahllisten, die Anzahl der Rückbelastungen, die Überschreitung von unterschiedlichen Limits und Umsatzkurven oder Ländercodes automatisch überprüft werden.

Über eine Schnittstelle, die vorzugsweise einem definierten Datenbankformat oder XML-Format entspricht, werden im Vorfeld einem Server die einzelnen Transaktionsinformationen übermittelt, damit noch fehlende Informationen vor Ort beim Schuldner einzutragen sind. Es ist jedoch auch denkbar, dass diese Informationen über ein Web-Frontend übertragen werden.

Ein weiterer Bestandteil sind Endgeräte, die durch zusätzliche Medienmechanismen vor einem Missbrauch geschützt werden. Hierzu dient eine Anwendung, die auf dem mobilen Endgerät installiert ist und die zusätzlich noch Informationen über die SIM-Karte oder die IMAI des mobilen Endgerätes überträgt.

Ein weiterer Bestandteil der vorliegenden Erfindung ist ein Lesestift, der so ausgebildet ist, dass durch einen Magnetsensor die Magnetkartenstreifen der Kreditkarten oder EC-Karten ausgelesen werden können. Die so ermittelten Informationen werden dann an das mobile Endgerät übertragen, damit dieses die Informationen weiter bearbeiten kann. In besonderen Fällen ist der Lesestift so ausgebildet, dass Plausibilitätsbetrachtungen hinsichtlich der gelesenen Karteninformationen durchgeführt werden. So ist es z.B. denkbar, dass der Aufbau der Kreditkartennummer überprüft wird oder bei EC-Karten die Bankleitzahlen. Somit können Fehler beim Einlesen vermieden werden.

In einer bevorzugten Ausführungsform sind Mittel vorhanden, so dass über eine kabellose Schnittstelle des mobilen Endgerätes, insbesondere Infrarotfunk oder Bluetooth, vordefinierte Informationen für die Anschlusstransaktionen aufgenommen werden, damit lediglich ein Auswahlprozess stattfinden muss und die Eingaben über die Tastatur somit erleichtert werden.

In einer weiteren Ausführungsform sind Mittel vorhanden, so dass über eine kabellose Schnittstelle des mobilen Endgerätes, insbesondere Funk oder Bluetooth, ein Belegdrucker angesprochen wird, der die Transaktion auf Papier festhält. Hierzu ist es denkbar, dass es sich um einen besonderen Druckertreiber und um eine entsprechende Applikation handelt, die den Drucker steuern.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigen:
- Fig. 1a,b: Beispiele für den Ablauf einer Transaktion mittels Kreditkarten, Servicekarten, Lastschriftverfahren oder Onlineüberweisung, bei denen der Geldfluss über mehrere Stationen erfolgt;
- Fig. 2: den technischen Ablauf einer Buchung;

Im Rahmen der Erfindung sind zahlreiche Abwandlungen und Weiterbildungen der beschriebenen Ausführungsbeispiele verwirklichbar.

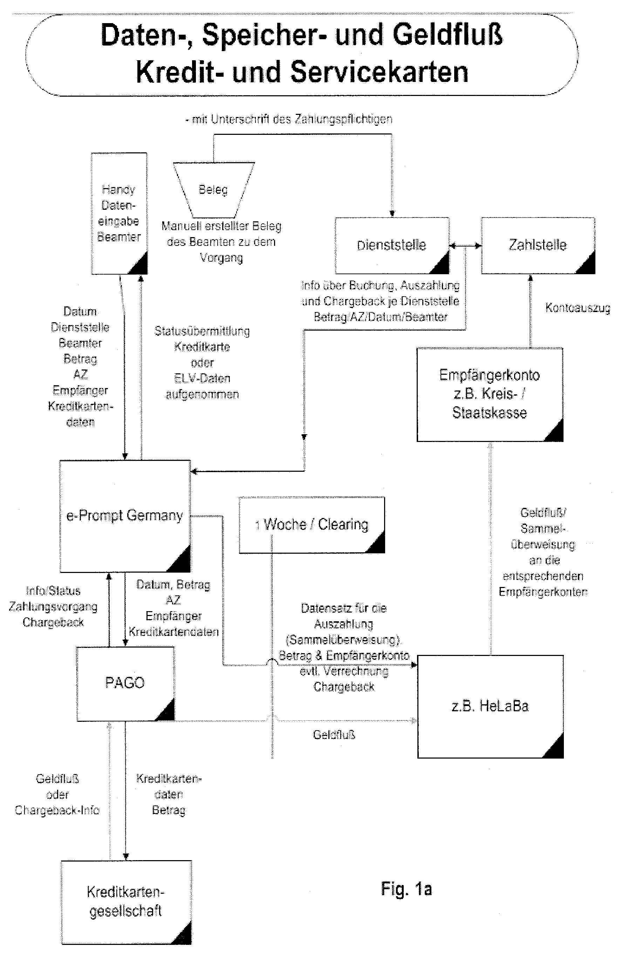

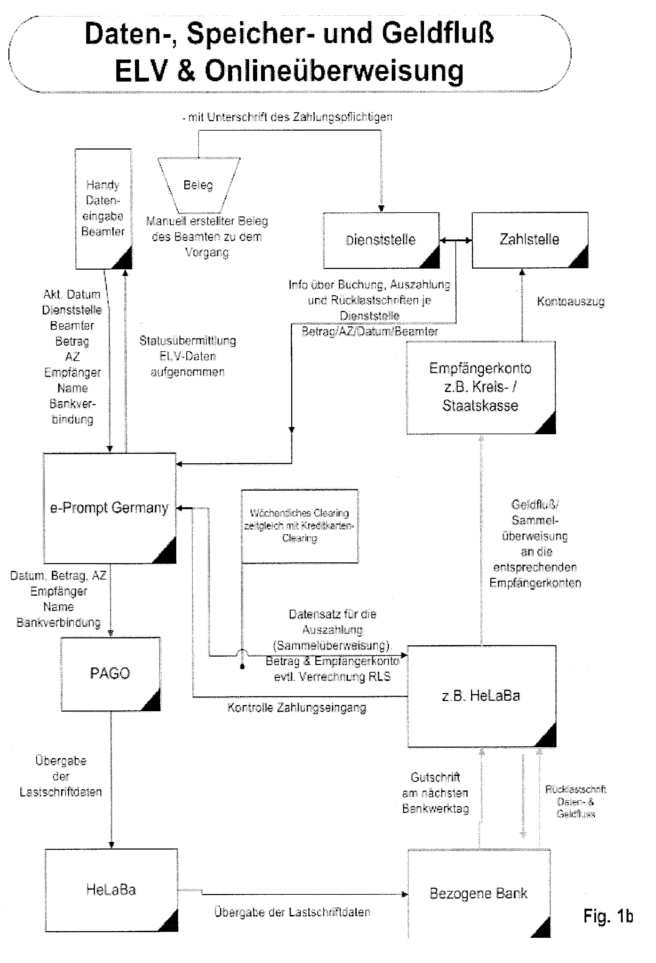

Aus den Figuren 1a und 1b ist der Ablauf der Transaktion des Geldes zu erkennen. Vom Endkunden wird das Geld über das Konto des Dienstleisters und/oder der e-Prompt im Rahmen des erfindungsgemäßen Transaktionssystems geleitet, das die mobilen Virtuellen Terminals betreut, um es dann an das Zielkonto weiterzuleiten.

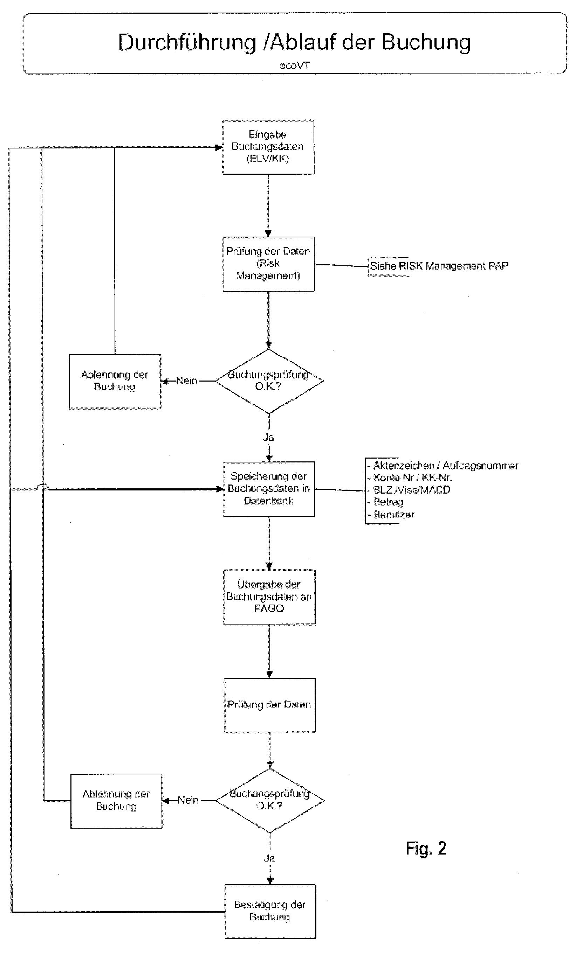

Aus der Figur 2 ist die Durchführung der Buchung im Detail zu erkennen. Hierbei erfolgt die Eingabe über ein Virtuelles Terminal, das durch das mobile Endgerät und durch das erfindungsgemäße Transaktionsserversystem bereitgestellt wird. Über die Eingabemaske, die vorzugsweise über WAP bereitgestellt wird, erfolgen ein Login und die Eingabe der Buchungsdaten, wobei bereits hier eine Vorauswahl von vorab abgespeicherten Buchungsinformationen vorgenommen werden kann. Nach der Übermittlung der Informationen erfolgt eine Prüfung der Daten hinsichtlich bestimmter Risiken, um dann eine vorläufige Zulassung der Buchung vorzunehmen. Falls dies der Fall ist, so werden die Buchungsinformationen gespeichert und in einer separaten Datenbank mit den notwendigen Informationen abgelegt, sodass das über ein Konto eingezogene Geld im Folgenden an das Zielkonto weitergeleitet werden kann. Als nächster Schritt wird der Buchungsdatensatz an einen großen Zahlungsabwickler weitergegeben. Dieser prüft erneut die Daten und gibt seine Zustimmung zu der Transaktion oder seine Ablehnung. Falls eine Bestätigung der Buchung erfolgt, so wird die Transaktion durchgeführt. Ansonsten erfolgt eine Ablehnung. Durch das System, das mobile Virtuelle Terminals bereitgestellt, kann sichergestellt werden, dass kosteneffiziente Transaktionen auf einem hohen Niveau stattfinden, die anspruchsvollen Sicherheitsanforderungen genügen und die einen Missbrauch verhindern, da das Login eindeutig das Zielkonto festlegt. Der Diebstahl eines mobilen Endgerätes würde nicht zu größeren Problemen führen, da lediglich das Geld auf ein nicht änderbares Konto eingezogen würde, von dem es jederzeit wieder zurücktransferiert werden kann.

Bestandteil der Erfindung kann zusätzlich ein Risikomanagement sein, bei dem im ersten Schritt überprüft wird, ob die Karte aus einem akzeptierten Herkunftsland stammt. Im Folgenden wird über zentrale Listen geprüft, ob es sich unter Umständen um eine gesperrte oder gestohlene Karte handelt. Diese Listen können von zentralen Institutionen bereitgestellt werden und online in das System integriert werden. Weiterhin wird auch überprüft, ob ein Limit an Tagen bereits überschritten wurde oder ob der Benutzer, der unter Umständen eine Vielzahl von Karten hat bereits ein Limit überschritten hat. Weiterhin wird überprüft, ob die Karte in einem bestimmten Zeitraum wiederholt bei Händlern eingesetzt wurde, was z.B. für einen Diebstahl der Karte sprechen könnte. Hierbei wird jedoch unterschieden, ob die Karte bei einem e-Prompt-Händler oder bei mehreren e-Prompt-Händlern eingesetzt wurde. Im letzten Schritt wird überprüft, ob das vorgegebene Limit bezüglich der Karte überschritten wurde. Sollte eines der Kriterien erfüllt worden sein, so wird die Kartennummer frühzeitig in einer Belegliste aufgenommen, die aufgrund des Prüfungsschemas relativ früh abgeprüft wird und somit eine Optimierung des Risikoprozesses mit sich bringt. Erst wenn alle Kriterien sicherheitsrelevanter Natur abgefragt wurden und positive Prognosen beschieden wurde, wird die Transaktion an einen Dienstleister weitergegeben.

## Patentansprüche

1. Verfahren zur Durchführung von Transaktionen mit einem mobilen Endgerät, umfassend einen Transaktionsserver, der über eine WAP- und/oder WEB-Schnittstelle angesprochen wird,
- bei dem über ein Login mittelbar oder unmittelbar das Ziel der Transaktion bestimmt wird, ohne dass dies aufgrund des Logins änderbar ist,
- bei dem über eine Auswahl die Zahlungsart bestimmt wird, insbesondere EC-Lastschrift, Kreditkartenbelastung, Service-Karten-Belastung oder Online-Überweisung,
- bei dem über weitere Eingabefelder die EC-Lastschriftinformationen, die Kreditkarteninformationen, die Service-Karten-Informationen oder die Online-Überweisungsinformationen, ein Betreff und die Summe bestimmt werden
- bei dem nach Bestätigung der Eingabe der Geldeinzug als Transaktion ausgelöst wird, um dann nach einer erfolgreichen Transaktion das Geld auf ein hinter dem Login abgelegtes Konto durch eine weitere Transaktion weiterzuleiten.

2. Verfahren nach dem vorhergehenden Anspruch, **dadurch gekennzeichnet, dass** die Transaktion automatisch erst auf ein Zwischenkonto erfolgt, um das Geld dann dem Zielkonto zuzustellen.

3. Verfahren nach einem oder mehreren der vorhergehenden Ansprüche, **dadurch gekennzeichnet, dass** beim Login ein sich täglich ändernder Code einzugeben ist.

4. Verfahren nach einem oder mehreren der vorhergehenden Ansprüche, **dadurch gekennzeichnet, dass** IMAI und/oder SIM und/oder Zertifikatinformationen in den Loginprozess einfließen.

5. Verfahren nach einem oder mehreren der vorhergehenden Ansprüche, **dadurch gekennzeichnet, dass** die WAP-/Web-Verbindung via GSM, GPRS, SSL oder WTLS erfolgt.

6. Verfahren nach einem oder mehreren der vorhergehenden Ansprüche, **dadurch gekennzeichnet, dass** zur Anzeige einer Transaktionsübersicht ein Modul eine Anzeige nach Benutzergruppe und/oder Login und/oder Zahlungsart und/oder Endgerät vornimmt.

7. Verfahren nach einem oder mehreren der vorhergehenden Ansprüche, **dadurch gekennzeichnet, dass** vor der Ausführung und/oder Weiterleitung der Transaktion ein Risikomanagement durchgeführt wird, bei dem die Anzahl der Transaktionen und/oder zentrale Diebstahllisten und/oder Rückbelastungen und/oder Limits und/oder Umsatzkurven und/oder Ländercodes automatisch überprüft werden.

8. Verfahren nach einem oder mehreren der vorhergehenden Ansprüche, **dadurch gekennzeichnet, dass** Zusatzinformationen im Vorfeld aus einer Datenbank in das mobile Endgerät und/oder in das Transaktionssystem herunter geladen werden, insbesondere Aktenzeichen, Adressen und Summen, um dann durch eine Auswahloperation eine Vielzahl von Informationen vorzubestimmen.

9. Verfahren nach einem oder mehreren der vorhergehenden Ansprüche, **dadurch gekennzeichnet, dass** über eine kabellose Schnittstelle des mobilen Endgerätes, insbesondere Infrarotfunk oder Bluetooth, ein Belegdrucker angesprochen wird, der die Transaktion auf Papier festhält.

10. Verfahren nach einem oder mehreren der vorhergehenden Ansprüche, **dadurch gekennzeichnet, dass** zum Einlesen der Karteninformationen ein Lesestift eingesetzt wird, der den Magnetstreifen der Karte abtastet, um die so gewonnen Informationen per Kabel oder kabellos an das mobile Endgerät zu übertragen, wobei die kabellose Übertragung vorzugsweise per Funk oder Infrarot erfolgt.

11. Vorrichtung zur Durchführung von Transaktionen mit einem mobilen Endgerät, umfassend einen Transaktionsserver, der so eingerichtet ist, dass er über eine WAP- und/oder WEB-Schnittstelle durch das mobile Endgerät ansprechbar ist,
- mit Mitteln, die über ein Loginprozess das Ziel der Transaktion bestimmen, ohne dass dies aufgrund des Logins änderbar ist,
- mit Mitteln, die über eine Menü geführte Auswahl die Zahlungsart bestimmen, insbesondere EC-Lastschrift, Kreditkartenbelastung, Service-Karten-Belastung oder Online-Überweisung,
- mit Mitteln, die über weitere Eingabefelder die EC-Lastschriftinformationen, die Kreditkarteninformationen, die Service-Karten-Informationen oder die Online-Überweisungsinformationen, einen Betreff und die Summe bestimmbar machen,
- mit Mitteln, bei denen nach Bestätigung der Eingabe der Geldeinzug als Transaktion ausgelöst wird, um dann nach einem erfolgreichen Transfer das Geld auf ein hinter dem Login abgelegtes Konto durch eine weitere Transaktion weiterzuleiten.

12. Vorrichtung nach dem vorhergehenden Vorrichtungsanspruch, **dadurch gekennzeichnet, dass** Mittel vorhanden sind, durch die die Transaktion automatisch erst auf mindestens ein Konto erfolgt, um dann durch eine erneute Transaktion die Summe auf ein hinter dem Login hinterlegtes Zielkonto zuzustellen.

13. Vorrichtung nach einem oder mehreren der vorhergehenden Vorrichtungsansprüche, **dadurch gekennzeichnet, dass** beim Login ein sich täglich ändernder Code einzugeben ist, damit der Server einen Zugriff auf das Transaktionsmanagement zulässt.

14. Vorrichtung nach einem oder mehreren der vorhergehenden Vorrichtungsansprüche, **dadurch gekennzeichnet, dass** Mittel Vorhanden sind, die IMAI und/oder SIM und/oder Zertifikatinformationen beim Loginprozess berücksichtigen.

15. Vorrichtung nach einem oder mehreren der vorhergehenden Vorrichtungsansprüche, **dadurch gekennzeichnet, dass** Mittel vorhanden sind, eine die WAP-/Web-Verbindung via GSM, GPRS, SSL oder WTLS ermöglichen.

16. Vorrichtung nach einem oder mehreren der vorhergehenden Vorrichtungsansprüche, **dadurch gekennzeichnet, dass** Mittel vorhanden sind, die eine automatische Auswertung der Transaktionen nach Zeitraum, insbesondere eine Transaktionsübersicht nach Dienstelle und/oder Login und/oder Zahlungsart und/oder Endgerät, vornehmen, um diese optisch darzustellen.

17. Vorrichtung nach einem oder mehreren der vorhergehenden Vorrichtungsansprüche, **dadurch gekennzeichnet, dass** Mittel vorhanden sind, die vor der Ausführung und/oder Weiterleitung der Transaktion ein automatisches Risikomanagement durchführen, das auf eine oder mehrere Datenbanken aufsetzt, bei dem die Anzahl der Transaktionen und/oder zentrale Diebstahllisten und/oder die Anzahl der Rückbelastungen und/oder Limits und/oder Umsatzkurven und/oder Ländercodes automatisch überprüft werden.

18. Vorrichtung nach einem oder mehreren der vorhergehenden Vorrichtungsansprüche, **dadurch gekennzeichnet, dass** Mittel vorhanden sind, die es erlauben, über eine weitere Schnittstelle, über die Zusatzinformationen im Vorfeld übermittelbar sind, insbesondere Aktenzeichen, Adressen, Summen, die dann vom mobilen Endgerät über das Web-/WAP-Interface auswählbar sind, durch eine Auswahloperation eine Vielzahl von Informationen vorzubestimmen.

19. Endgerät zur Durchführung von Transaktionen mit einem Transaktionsserver, der über eine WAP-und/oder WEB-Schnittstelle angesprochen wird,
- mit Mitteln, die so eingerichtet sind, dass über ein Login mittelbar oder unmittelbar das Ziel der Transaktion bestimmt wird, ohne dass dies aufgrund des Logins änderbar ist, wobei Mittel vorhanden sind, die in den Loginprozess zusätzlich die IMAI-und/oder SIM- und/oder Zertifikatinformationen einfließen lassen.
- mit Mitteln, die so eingerichtet sind, dass über eine Auswahl die Zahlungsart bestimmt wird, insbesondere EC-Lastschrift, Kreditkartenbelastung, Service-Karten-Belastung oder Online-Überweisung,
- mit Mitteln, die so eingerichtet sind, dass über weitere Eingabefelder die EC-Lastschriftinformationen, die Kreditkarteninformationen, die Service-Karten-Informationen oder die Online-Überweisungsfunktionen, ein Betreff und die Summe bestimmt werden,
- mit Mitteln, die so eingerichtet sind, dass bei der Bestätigung nach der Eingabe der Geldeinzug als Transaktion ausgelöst wird, um dann nach einer erfolgreichen Transaktion das Geld auf ein hinter dem Login abgelegtes Konto durch eine weitere Transaktion weiterzuleiten.

20. Endgerät nach dem vorhergehenden Anspruch, **dadurch gekennzeichnet, dass** die Transaktion automatisch erst auf ein Zwischenkonto erfolgt, um das Geld dann dem Zielkonto zuzustellen.

21. Endgerät nach einem oder mehreren der vorhergehenden Endgeräteansprüche, **dadurch gekennzeichnet, dass** beim Login ein sich täglich ändernder Code einzugeben ist.

22. Endgerät nach einem oder mehreren der vorhergehenden Endgeräteansprüche, **dadurch gekennzeichnet, dass** Mittel vorhanden sind, die eine WAP-/Web-Verbindung via GSM, GPRS, SSL oder WTLS ermöglichen.

23. Endgerät nach einem oder mehreren der vorhergehenden Endgeräteansprüche, **dadurch gekennzeichnet, dass** Mittel vorhanden sind, um die Zusatzinformationen im Vorfeld aus einer Datenbank in den Speicher des mobilen Endgerätes herunter zu laden, insbesondere Aktenzeichen, Adressen, Summen in das mobile Endgerät, um dann durch eine Auswahloperation eine Vielzahl von Informationen vorzubestimmen, bevor die Transaktion ausgeführt wird.

24. Endgerät nach einem oder mehreren der vorhergehenden Endgeräteansprüche, **dadurch gekennzeichnet, dass** Mittel vorhanden sind, so dass über eine kabellose Schnittstelle des mobilen Endgerätes, insbesondere Infrarotfunk oder Bluetooth, ein Belegdrucker angesprochen wird, der die Transaktion auf Papier festhält.

25. Kartenlesestift mit einem Magnetsensor, der so ausgebildet ist, dass er durch Führen über den Magnetstreifen einer Karte, die Karteninformationen ausliest, um die so gewonnenen Informationen über eine Schnittstelle per Kabel oder kabellos an das mobile Endgerät nach einem oder mehreren der vorhergehenden Endgeräteansprüche zu übertragen, wobei die kabellose Übertragung vorzugsweise per Funk oder Infrarot erfolgt.

26. Computersystem, **gekennzeichnet durch** eine Einrichtung, die den Ablauf eines Verfahrens nach einem oder mehreren der vorhergehenden Verfahrensansprüche erlaubt.

27. Mobiles Endgerät, **gekennzeichnet durch** Mittel und eine Einrichtung, die den Ablauf eines Verfahrens nach einem oder mehreren der vorhergehenden Verfahrensansprüche erlaubt.
